# EUROPÄISCHE PATENTSCHRIFT

(11) **EP 1 024 178 B1**
(45) Veröffentlichungstag und Bekanntmachung des Hinweises auf die Patenterteilung: **24.07.2002**
(21) Anmeldenummer: 00810045.5
(22) Anmeldetag: 20.01.2000
(51) Int. Cl.: C09B 67/22, D06P 3/60, D21H 21/28

(54) **Farbstoffmischungen**
Dyestuff mixtures
Mélanges de colorants

(30) Priorität: 29.01.1999 EP 99101931
(43) Veröffentlichungstag der Anmeldung: 02.08.2000
(73) Patentinhaber: Ciba Specialty Chemicals Holding Inc., 4057 Basel (CH)
(72) Erfinder: Käser, Adolf, 4103 Bottmingen (CH); Schlenker, Wolfgang, 4147 Aesch (CH)

(56) Entgegenhaltungen:
- EP-A- 0 534 903
- EP-A- 0 851 004
- EP-A- 0 919 596
- CH-A- 614 458
- DE-A- 3 717 869

## Beschreibung

Gegenstand der vorliegenden Erfindung sind violette Farbstoffmischungen zum Nuancieren von Papier.

Zum Nuancieren von weissem Papier, welches optischen Aufheller enthält, werden in der Praxis üblicherweise violette Farbstoffe von hoher Brillanz eingesetzt, deren Nuance in einem eng begrenzten Bereich liegt. Unter diesen Farbstoffen gibt es einzelne, die zwar die gesuchte Nuance liefern, jedoch mit gewissen unerwünschten Eigenschaften behaftet sind. Sie besitzen z. B. in Form ihrer Natriumsalze eine schlechte Wasserlöslichkeit, was für die Herstellung von konzentrierten wässrigen Formulierungen aufwendige Massnahmen zur Überführung in besser lösliche Salze erfordert, und/oder ihre verdünnten Stammlösungen zeigen bereits in Wasser von 10° deutscher Härte starke Ausfällungen. Abwandlung der Farbstoffe durch Einführung einer zusätzlichen Sulfogruppe vermindert zwar die genannten Nachteile, führt jedoch gleichzeitig zu einer unerwünschten Erniedrigung der Affinität.

Es bestand daher der Bedarf nach violetten Farbstoffen zum Nuancieren von Papier, welche die gesuchte Nuance liefern, ohne die erwähnten Nachteile aufzuweisen. Unter Nuancieren versteht man das Behandeln mit Farbstoffen in einer solchen Menge, dass zwar praktisch keine sichtbare Färbung erhalten wird, aber z. B. andere Eigenschaften wie die Brillanz oder Helligkeit von weissem Papier verbessert werden. Die eingesetzten Mengen an Farbstoff liegen dabei etwa zwischen 0,5 und 100 g, vorzugsweise zwischen 1 und 50 g reinem Farbstoff pro Tonne Papier.

Es wurde nun gefunden, dass bestimmte Farbstoffmischungen die erwünschten Eigenschaften zeigen. Die Brillanz der erhaltenen Färbungen ist in den Konzentrationen, die beim Nuancieren angewendet werden, überraschenderweise gleich gut wie bei den einzelnen Komponenten, während bekanntermassen Farbstoffmischungen normalerweise deutlich trübere Färbungen ergeben. Die erfindungsgemässen Farbstoffmischungen zeichnen sich zudem durch gute Wasserlöslichkeit und Stabilität gegen Hartwasser aus.

Gegenstand der Erfindung sind somit violette Farbstoffmischungen zum Nuancieren von Papier, bestehend aus einem violetten Farbstoff der Formel 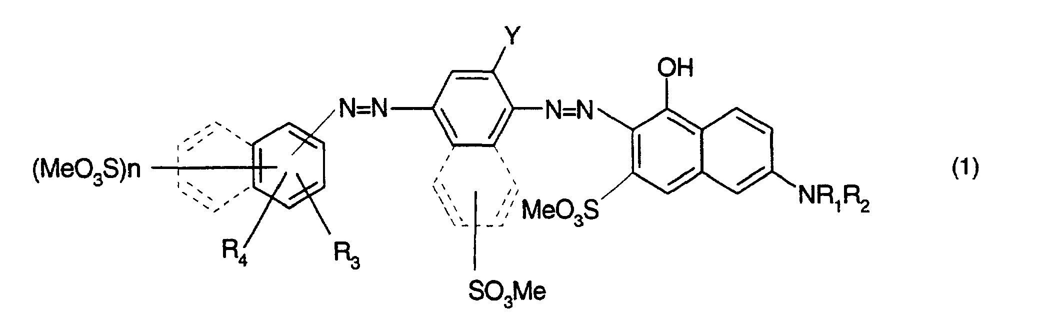 oder 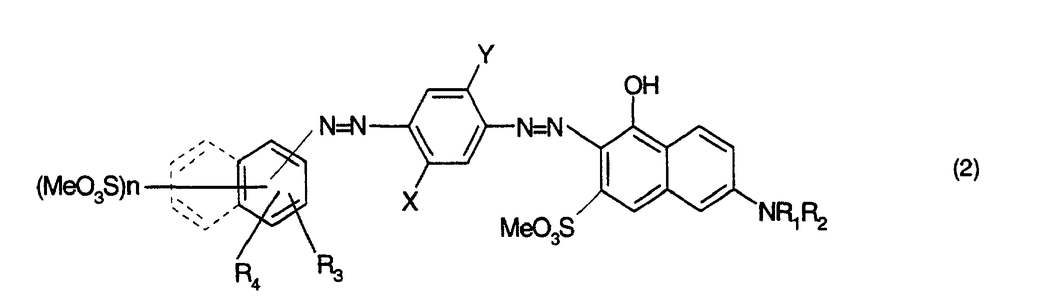 worin
R₁ Wasserstoff oder Alkyl,
R₂ Wasserstoff, Alkyl oder gegebenenfalls substituiertes Aryl,
R₃ und R₄ unabhängig voneinander je Wasserstoff oder Alkyl,
X und Y unabhängig voneinander jeweils Wasserstoff, Alkyl oder Alkoxy,
n 1 oder 2 und
Me Wasserstoff oder ein Äquivalent eines farblosen Kations bedeutet,
und so viel eines roten, blauen oder weiteren violetten Farbstoffes, dass mit dieser Farbstoffmischung im Cielab Farbkoordinatensystem ein relativer Farbwinkel von 270 bis 295° resultiert, wenn die Färbung 0,00005 bis 0,005 Gew. % Farbstoff, bezogen auf das Gewicht des Papiers, enthält.

Bei den Farbstoffen der Formel (1) und (2) bedeutet Alkyl insbesondere C₁-C₄-Alkyl, wie z.B. Methyl, Ethyl, n-Propyl, iso-Propyl, n-Butyl, sec-Butyl, iso-Butyl und tert-Butyl.

Unter Alkoxy ist vor allem C₁-C₄-Alkoxy zu verstehen, z. B. Methoxy, Ethoxy, n-Propoxy, iso-Propoxy, n-Butoxy, sec-Butoxy, iso-Butoxy und tert-Butoxy.

Aryl bedeutet z. B. Naphthyl oder insbesondere Phenyl, und diese Reste können substituiert sein, z. B. durch Alkyl, Alkoxy, Sulfo, Carboxy, Halogen, Alkylcarbonylamino oder Alkoxycarbonyl.

Me bedeutet Wasserstoff oder ein Äquivalent eines farblosen Kations, beispielsweise Lithium, Natrium, Kalium, Ammonium oder die protonierte Form eines C₄-C₁₂-Trialkylamins, C₄-C₁₂-Diamins, C₂-C₁₅-Alkanolamins oder Polyglykolamins. Vorzugsweise hat Me die Bedeutung Wasserstoff oder Natrium.

In den Dokumenten EP-A-851 004, EP-A-534 903, CH-A-614 458, DE-A-3717869 und EP-A-919 596 werden ebenfalls wasserlösliche Disazofarbstoffe zum Färben bzw. Nuancieren von Papier beschrieben.

Der absolute Farbwinkel ist im ClELab-System durch die Farbkoordinaten a* und b* definiert. (Colorimetry, second Edition, Publication CIE No. 15.2 (1986)). Die Werte in der vorliegenden Patentanmeldung beziehen sich auf den relativen Farbwinkel, der auf die Farbkoordinaten des nicht nuancierten und nicht aufgehellten Basis-Papiers bezogen ist. An die Stelle der absoluten Werte a* und b* treten bei der Berechnung des relativen Farbwinkels die Differenzen zum Basis-Papier (a*-a*₀) und (b*-b*₀). Alle Werte für den relativen Farbwinkel beziehen sich auf die beim Nuancieren von weissem Papier eingesetzten geringen Farbstoffmengen.

Vorzugsweise verwendet man im erfindungsgemässen Verfahren eine Farbstoffmischung, die so zusammengesetzt ist, dass eine Papierfärbung mit dieser Farbstoffmischung in der angegebenen Konzentration einen relativen Farbwinkel von 275 bis 285 ° ergibt.

Besonders bevorzugte violette Farbstoffe entsprechen der Formel 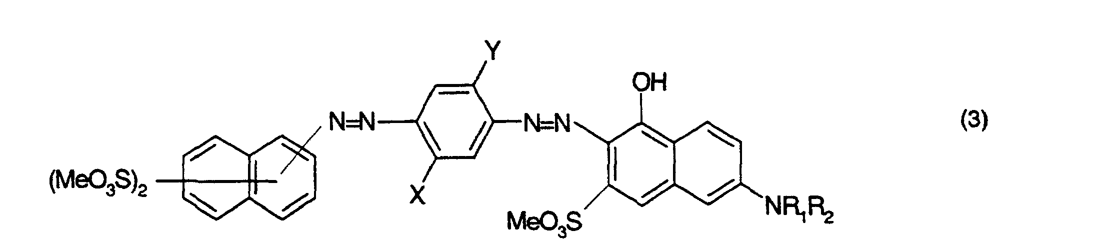 oder 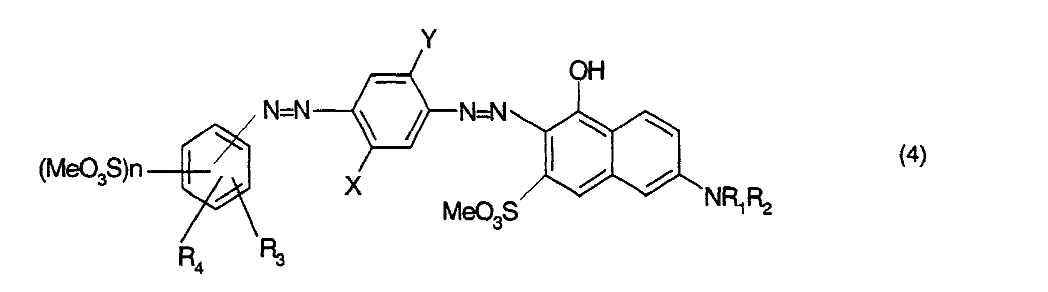 worin
X Wasserstoff oder C₁-C₂-Alkyl,
Y Wasserstoff oder C₁-C₂-Alkoxy,
R₁ Wasserstoff, oder C₁-C₂-Alkyl,
R₂ Wasserstoff, C₁-C₂-Alkyl oder Phenyl,
R₃ und R₄ unabhängig voneinander je Wasserstoff oder C₁-C₂-Alkyl, und
Me Wasserstoff, Natrium, Lithium oder ein organisches Ammonium- oder Alkanolammmoniumkation bedeuten.

Unter diesen sind die violetten Farbstoffe der Formel 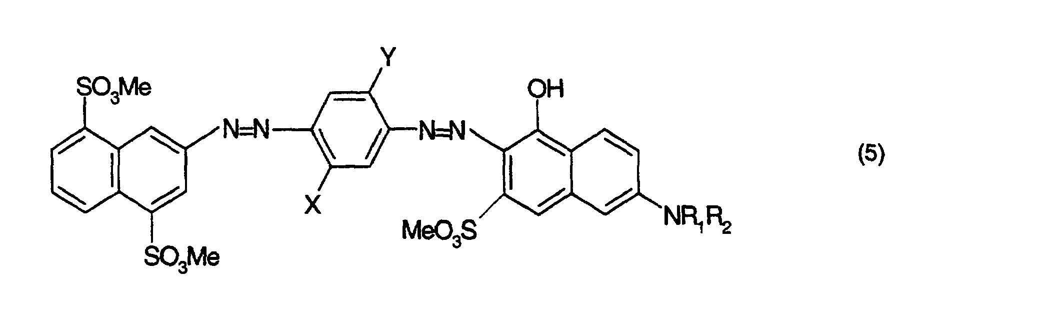 sowie der Formel 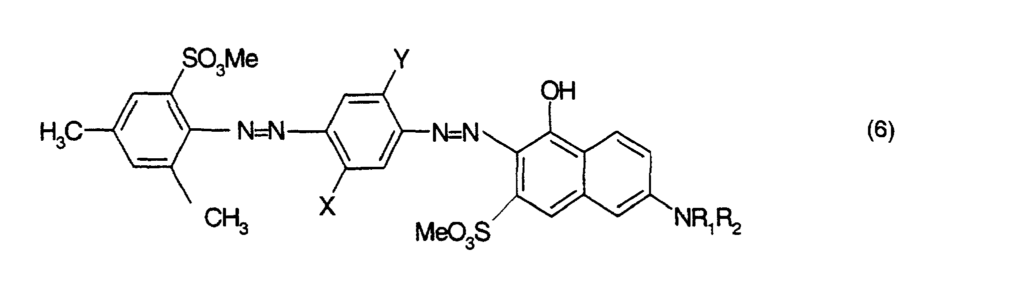 worin
X und Y unabhängig voneinander Wasserstoff, C₁-C₂-Alkyl oder C₁-C₂-Alkoxy,
R₁ Wasserstoff, oder C₁-C₂-Alkyl,
R₂ Wasserstoff, C₁-C₂-Alkyl oder Phenyl und
Me Wasserstoff, Natrium oder ein organisches Ammonium- oder Alkanolammmoniumkation bedeutet,
besonders bevorzugt.

Als zweite Komponente enthalten die erfindungsgemässen Farbstoffmischungen einen roten, blauen oder weiteren violetten Farbstoff, der die Nuance der Färbung mit dem Farbstoff der Formel (1) oder (2) derart verschiebt, dass im Endeffekt ein gewünschter relativer Farbwinkel von 270 bis 295° resultiert. Geeignete Farbstoffe sind vor allem die in der Papierindustrie Verwendung findenden anionischen Farbstoffe, vor allem anionische Azofarbstoffe.

Bevorzugt sind rote Farbstoffe der Formel 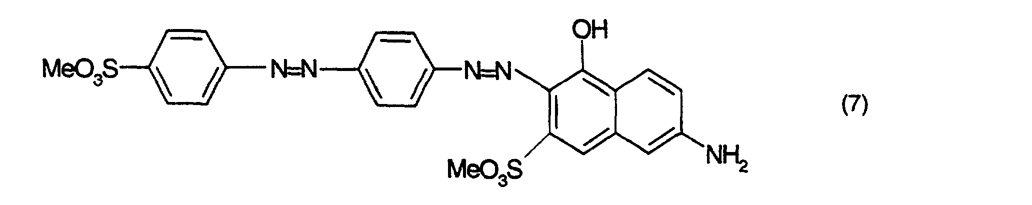 oder der Formel 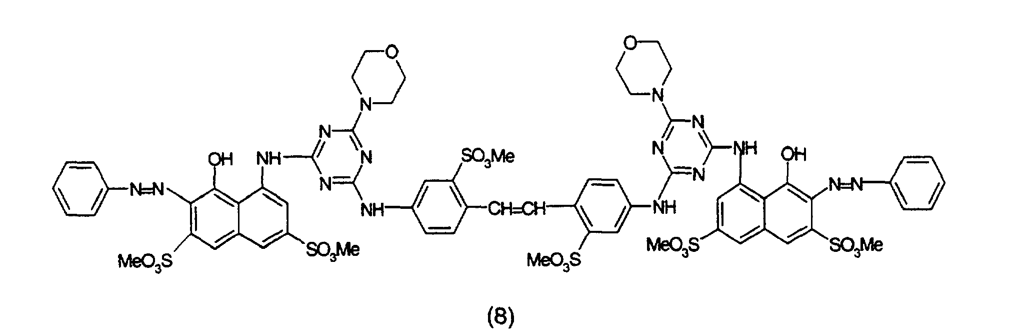 worin
Me Wasserstoff, Natrium oder ein organisches Ammonium- oder Alkanolammmoniumkation bedeutet.

Die violetten Farbstoffe der Formeln (1) bis (6), sowie die roten Farbstoffe der Formeln (7) und (8) und die blauen Nuancierfarbstoffe sind bekannt oder können auf an sich bekannte Art und Weise dargestellt werden.

Die erfindungsgemässen Farbstoffmischungen eignen sich vor allem zum Nuancieren von Papier, insbesondere von Papier, welches optischen Aufheller enthält. Sie werden vorzugsweise als feste oder flüssige Handelsform eingesetzt.

Als Pulver oder Granulat werden die Farbstoffmischungen insbesondere bei der diskontinuierlichen Massefärbung verwendet, wobei die Farbstoffmischung, üblicherweise in Form einer Stammlösung, im Pulper, Holländer oder in der Mischbütte zugesetzt wird. Dabei werden vorzugsweise Farbstoffzubereitungen eingesetzt, die neben der Farbstoffmischung noch Coupagemittel, z. B. Harnstoff als Lösungsvermittler, Dextrin, Glaubersalz, Kochsalz sowie Dispergatoren, Entstäubungsmittel und Sequestriermittel, wie Tetranatriumphosphat enthalten können.

Ein weiterer Gegenstand der Erfindung sind somit feste Farbstoffzubereitungen zum Färben von Papier, welche eine erfindungsgemässe Farbstoffmischung enthalten.

In den letzten Jahren hat die Verwendung von konzentrierten wässrigen Lösungen von Farbstoffen an Bedeutung gewonnen, und zwar wegen der Vorteile, die solche Lösungen gegenüber Farbstoffen in Pulverform besitzen. Durch die Verwendung von Lösungen werden die mit der Staubbildung verbundenen Schwierigkeiten vermieden und die Verbraucher von der zeitraubenden und oftmals schwierigen Auflösung des Farbstoffpulvers in Wasser befreit. Die Verwendung von konzentrierten Lösungen wurde ausserdem durch die Entwicklung von kontinuierlichen Färbeverfahren für Papier angeregt, da es bei diesen Verfahren zweckmässig ist, die Lösung direkt in den Stoffstrom zu dosieren oder an irgendeinem anderen geeigneten Punkt der Papierherstellung zuzufügen.

Ein weiterer Gegenstand der Erfindung sind daher konzentrierte wässrige Lösungen der erfindungsgemässen Farbstoffmischungen zum Färben von Papier, welche 5 bis 30 Gew. %, bezogen auf das Gesamtgewicht der Lösung, einer erfindungsgemässen Farbstoffmischung enthalten.

Die konzentrierten Lösungen weisen vorzugsweise einen niedrigen Gehalt an anorganischen Salzen auf, was ggf. durch bekannte Methoden, wie z. B. Umkehrosmose, erreicht werden kann.

Die konzentrierten Lösungen können weitere Hilfsmittel enthalten, beispielsweise Lösungsvermittler wie ε-Caprolactam oder Harnstoff, organische Lösungsmittel, wie z. B. Glykole, Polyethylenglykole, Dimethylsulfoxid, N-Methylpyrrolidon, Acetamid, Alkanolamine oder Polyglykolamine.

In den nachfolgenden Beispielen bedeuten die Teile Gewichtsteile, und die Temperaturen sind in Celsiusgrad angegeben. Die angegebenen Mengen beziehen sich auf reinen Farbstoff, berechnet als freie Säure.

Beispiele 1 - 5: Die Nuance (bzw. der relative Farbwinkel von 275° im Cielab Farbkoordinatensystem) des Farbstoffes C. I. Direct Violet 9, der als idealer Farbstoff zum Nuancieren von Papier gilt, wird mit einer Mischung, bestehend aus dem violetten Farbstoff C. I. Direct Violet 35 der Formel 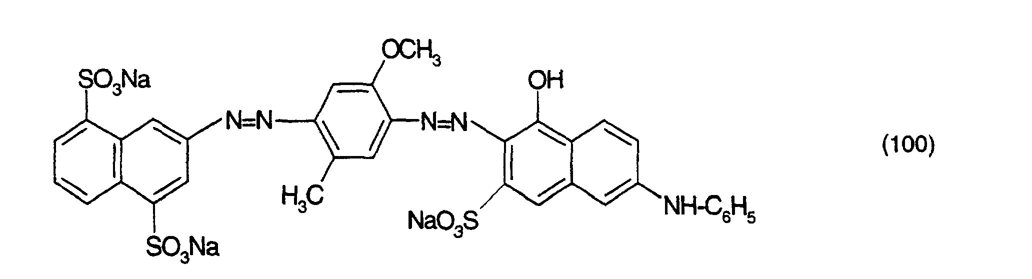 und dem roten Farbstoff Direct Red 254 der Formel 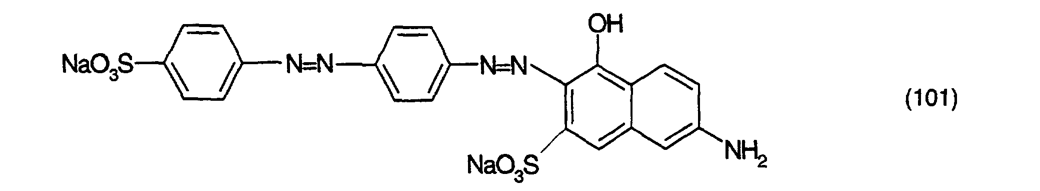 bzw. dem roten Farbstoff Direct Red 227 der Formel 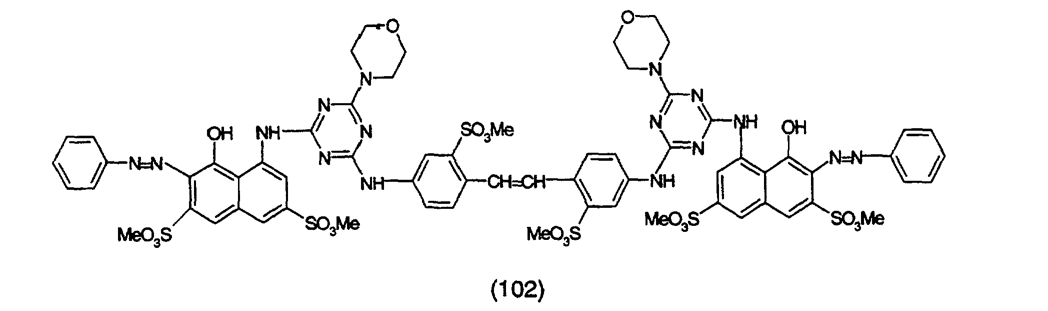 exakt nachgestellt. Die folgende Tabelle 1 zeigt die erhaltenen Werte für die Nuancierfärbungen von Papier.

**Tabelle 1:**

| Beisp. | Farbstoff (ohne opt. Aufheller) | CIELAB Koordinaten | | | Weissgrad | | rel.Farb -winkel |
|---|---|---|---|---|---|---|---|
| | | L* | a* | b* | B_{ISO} | W_{CIE} | h |
| 1 | 0,0008 % Direct Violet 9 (Referenzfärbung) | 93,4 | 0,6 | 0,2 | 84,0 | 82,9 | 277° |
| 2 | Direct Violet 35 + Direct Red 254 | 93,2 | 0,7 | 0,1 | 83,7 | 83,1 | 278° |
| 3 | Direct Violet 35 + Direct Red 227 | 93,4 | 0,7 | 0,4 | 83,8 | 82,1 | 279° |
| 4 | Direct Violet 35 + Direct Violet 26 | 93,3 | 0,7 | 0,2 | 83,8 | 82,8 | 279° |
| 5 | Direct Violet 26 + Direct Blue 67 | 93,3 | 0,7 | 0,2 | | | 279° |

Sowohl in der Nuance als auch im Weissgrad unterscheiden sich die Nuancierungen mit den Farbstoffmischungen nur geringfügig von der Nuancierung mit dem Referenz-Farbstoff Direct Violet 9.

Beispiele 6 - 8: Arbeitet man genau wie in den Beispielen 1 - 5 beschrieben, verwendet jedoch zusätzlich 0,25 Gew. %, bezogen auf das Papiergewicht, des optischen Aufhellers der Formel 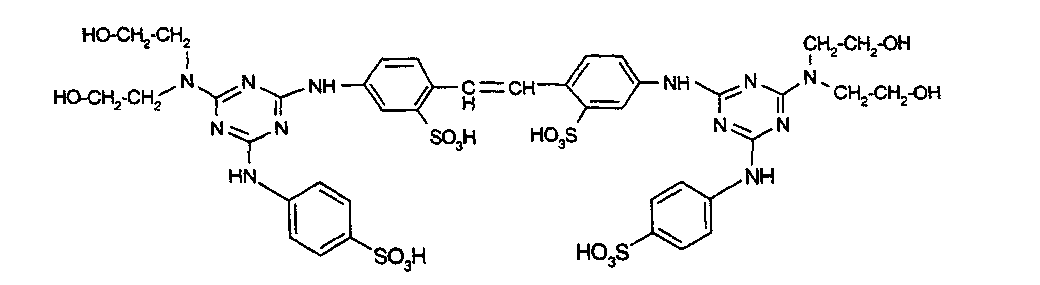 so erhält man die in der folgenden Tabelle 2 angegebenen Werte.

**Tabelle 2:**

| Beisp. | Farbstoff + 0,25 % opt. Aufheller | CIELAB Koordinaten | | | Weissgrad | | rel. Farb- winkel |
|---|---|---|---|---|---|---|---|
| | | L* | a* | b* | B_{ISO} | W_{CIE} | h |
| 6 | 0,0008 % Direct Violet 9 | 94,2 | 3,2 | -8,3 | 96,6 | 123,3 | 284° |
| 7 | Direct Violet 35 + Direct Red 254 | 94,0 | 3,1 | -8,3 | 96,1 | 122,8 | 284° |
| 8 | Direct Violet 35 + Direct Red 227 | 94,1 | 3,2 | -8,1 | 96,2 | 122,2 | 284° |

Sowohl in der Nuance als auch im Weissgrad unterscheiden sich die Nuancierungen mit den Farbstoffmischungen nur geringfügig von der Nuancierung mit dem Referenz-Farbstoff Direct Violet 9.

Beispiele 9 bis 11: Arbeitet man genau wie in den Beispielen 1 - 5 beschrieben, verwendet jedoch zusätzlich 0,75 Gew. %, bezogen auf das Papiergewicht, des in den Beispielen 6 bis 8 verwendeten optischen Aufhellers so erhält man die in der folgenden Tabelle 3 angegebenen Werte.

**Tabelle 3:**

| Beisp. | Farbstoff + 0,75 % opt. Aufheller | CIELAB Koordinaten | | | Weissgrad | | rel.Farb- winkel |
|---|---|---|---|---|---|---|---|
| | | L* | a* | b* | B_{ISO} | W_{CIE} | h |
| 9 | 0,0008 % Direct Violet 9 | 94,6 | 3,8 | -11,3 | 102,0 | 137,2 | 283° |
| 10 | Direct Violet 35 + Direct Red 254 | 94,4 | 3,8 | -11,3 | 101,7 | 137,1 | 283° |
| 11 | Direct Violet 35 + Direct Red 227 | 94,5 | 4,0 | -11,6 | 102,3 | 138,4 | 284° |

Sowohl in der Nuance als auch im Weissgrad unterscheiden sich die Nuancierungen mit den Farbstoffmischungen nur geringfügig von der Nuancierung mit dem Referenz-Farbstoff.

Beispiele 12 - 15: In der folgenden Tabelle 4 ist die Stabilität von wässrigen Formulierungen des Farbstoffes Direct Violet 9 mit erfindungsgemässen Farbstoffmischungen verglichen:

**Tabelle 4:**

| Beisp. | Farbstoff (jeweils als Na-Salz) | % Farbstoff. formuliert in H₂O | Stabilität der Formul. bei - 10° C bis 40° C |
|---|---|---|---|
| 12 | Direct Violet 9 | 10 Gew. % | löst sich nicht vollständig |
| 13 | Direct Violet 35 + Direct Red 254 | ca. 11 Gew. % | mind. 2 Monate sedimentfrei |
| 14 | Direct Violet 35 + Direct Red 227 | 11 Gew. % | mind. 2 Monate sedimentfrei |
| 15 | Direct Violet 35 + Direct Blue 290 | ca. 7 Gew. % | mind. 2 Monate sedimentfrei |

Beispiele 16 - 20: In der folgenden Tabelle 5 ist die Stabilität in Hartwasser (10° dH) einer 1 - 10 %igen Stammlösung von wässrigen Formulierungen des Farbstoffes Direct Violet 9 mit erfindungsgemässen Farbstoffmischungen verglichen. Die Formulierungen wurden hergestellt wie im Beispiel 29 beschrieben:

**Tabelle 5:**

| Beisp. | Farbstoff (jeweils als Na-Salz) | Stärke der Formulierung | Stabilität einer 1 -10 %igen Stammlösung, hergestellt mit Flüssigformulierung |
|---|---|---|---|
| 16 | Direct Violet 9 | 16 Gew. % | fällt sofort aus |
| 17 | Direct Violet 35 + Direct Red 254 | ca. 11 Gew. % | mehr als 1 Woche |
| 18 | Direct Violet 35 + Direct Red 227 | ca. 11 Gew. % | mehr als 1 Woche |
| 19 | Direct Violet 35 + Direct Violet 51 | ca. 10 Gew. % | mehr als 1 Woche |
| 20 | Direct Violet 35 + Direct Violet 26 | ca. 15 Gew. % | einige Stunden |

### Beispiele 21 - 27:

Die folgende Tabelle enthält weitere Beispiele von erfindungsgemässen Farbstoff mischungen, die auf Papierfärbungen ebenfalls einen Farbwinkel wie in den Beispielen 1 bis 5, bzw. mit optischem Aufheller wie in den Beispielen 6 - 11 ergeben.

**Tabelle 6:**

| Beispiel | Farbstoff 1 | Farbstoff 2 |
|---|---|---|
| 21 | Direct Violet 35 | Direct Violet 26 |
| 22 | Direct Violet 35 | Direct Violet 51 |
| 23 | Direct Violet 51 | Direct Blue 290 |
| 24 | Direct Violet 51 | Direct Blue 67 |
| 25 | Direct Violet 51 | Direct Blue 273 |
| 26 | Direct Violet 26 | Direct Blue 290 |
| 27 | Direct Violet 26 | Direct Blue 279 |

Beispiel 28: Von einer Stoffmischung mit 50 % Sulfat-Langfaser und 50 % Sulfit-Kurzfaser (gebleicht), die in einem Refiner auf 35° Schopper Riegler gemahlen wurde, werden 10 Teile, bezogen auf Trockengehalt, in 460 Teilen Wasser und 1,2 Teilen Calciumcarbonat (Omyalite OM 50) während einer Stunde dispergiert.

Dann werden für einen Farbstoffeinsatz von 8 g pro t Faser aus einer 0,0016 %igen Farbstoffstammlösung 5 Teile gegeben (0,00008 g Farbstoff gemäss Beispiel 1 pro 10 g Faser). Nach 15 Min. werden 0,2 Teile Aquapel 320 und anschliessend 0,005 Teile Percol 155 zugesetzt. Dann wird mit Wasser auf 1000 Teile verdünnt und daraus Papier hergestellt.

Beispiel 29: 125 Teile einer wässrigen salzfreien Farbstofflösung, enthaltend 13,5 Teile Direct Violet 35 in Form des Natriumsalzes und 3 Teile Triethanolamin, werden mit 16,5 Teilen einer wässrigen salzfreien Farbstofflösung, enthaltend 2,4 Teile Direct Red 254, in Form des Natriumsalzes, und 1 Teil Harnstoff, bei Raumtemperatur verrührt. Man erhält eine Farbstofflösung, die während mindestens 2 Monaten stabil ist.

## Patentansprüche

1. Violette Farbstoffmischungen zum Nuancieren von weissem Papier, bestehend aus einem violetten Farbstoff der Formel 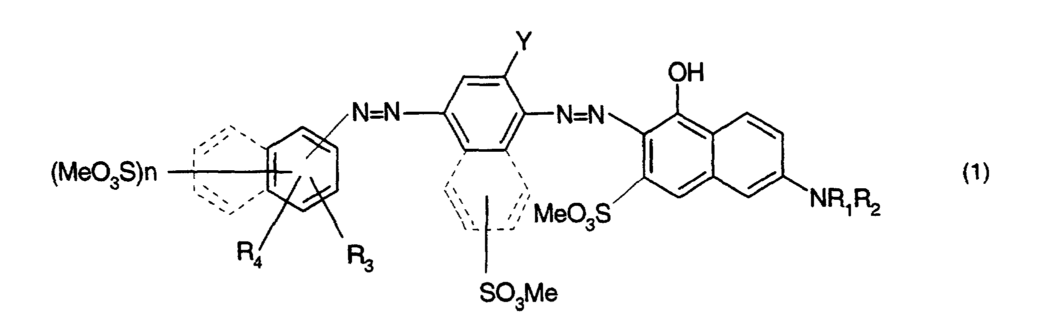 oder 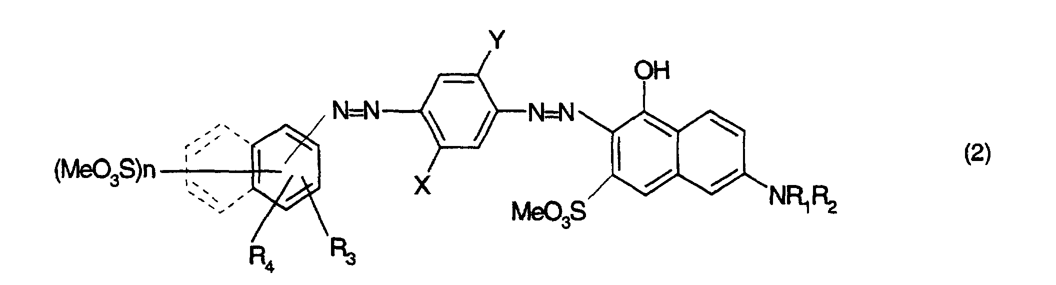 worin
R₁ Wasserstoff oder Alkyl,
R₂ Wasserstoff, Alkyl oder gegebenenfalls substituiertes Aryl,
R₃ und R₄ unabhängig voneinander je Wasserstoff oder Alkyl,
X und Y unabhängig voneinander jeweils Wasserstoff, Alkyl oder Alkoxy,
n 1 oder 2 und
Me Wasserstoff oder ein Äquivalent eines farblosen Kations bedeutet,
und so viel eines roten, blauen oder weiteren violetten Farbstoffes, dass mit dieser Farbstoffmischung im Cielab Farbkoordinatensystem ein relativer Farbwinkel von 270 bis 295° resultiert, wenn die Färbung 0,00005 bis 0,005 Gew. % Farbstoff, bezogen auf das Gewicht des Papiers, enthält.

2. Farbstoffmischung gemäss Anspruch 1, **dadurch gekennzeichnet, dass** mit dieser Farbstoffmischung ein relativer Farbwinkel von 275 bis 285° resultiert.

3. Farbstoffmischung gemäss Anspruch 1 oder 2, **dadurch gekennzeichnet, dass** sie einen violetten Farbstoff der Formel (1) oder (2) enthält, worin
R₁ Wasserstoff oder C₁-C₄- Alkyl,
R₂ Wasserstoff, C₁-C₄- Alkyl oder gegebenenfalls substituiertes Phenyl,
R₃ Wasserstoff oder C₁-C₄- Alkyl,
X und Y unabhängig voneinander jeweils Wasserstoff, C₁-C₄- Alkyl oder C₁-C₄- Alkoxy,
n 1 oder 2 und
Me Wasserstoff, Natrium, Lithium oder die protonierte Form eines C₄-C₁₂-Trialkylamins, C₄-C₁₂-Diamins, C₂-C₁₅-Alkanolamins oder Polyglykolamins bedeutet,

4. Farbstoffmischung gemäss einem der Ansprüche 1 bis 3, **dadurch gekennzeichnet, dass** sie einen violetten Farbstoff der Formel 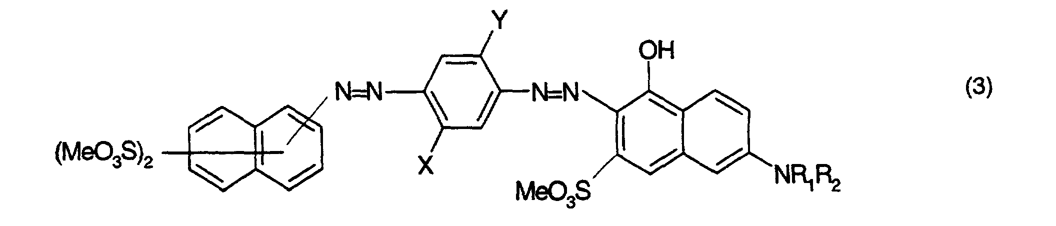 oder 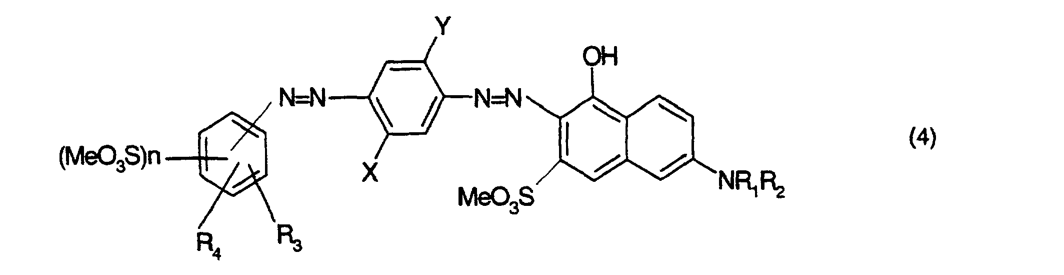 enthält, worin
X Wasserstoff oder C₁-C₂-Alkyl,
Y Wasserstoff oder C₁-C₂-Alkoxy,
R₁ Wasserstoff, oder C₁-C₂-Alkyl,
R₂ Wasserstoff, C₁-C₂-Alkyl oder Phenyl,
R₃ und R₄ unabhängig voneinander je Wasserstoff oder C₁-C₂-Alkyl, und
Me Wasserstoff, Natrium oder ein organisches Ammonium- oder Alkanolammmoniumkation bedeuten.

5. Farbstoffmischung gemäss Anspruch 4, **dadurch gekennzeichnet, dass** sie einen violetten Farbstoff der Formel 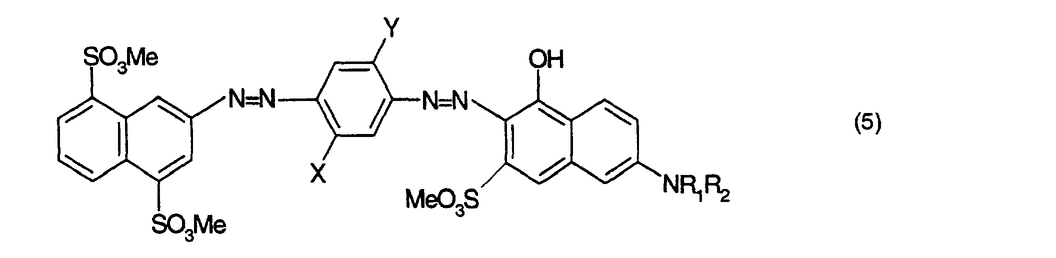 oder der Formel 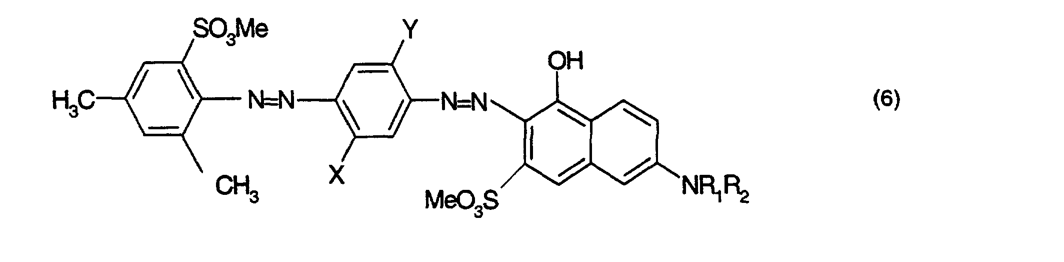 enthält, worin
X und Y unabhängig voneinander Wasserstoff, C₁-C₂-Alkyl oder C₁-C₂-Alkoxy,
R₁ Wasserstoff, oder C₁-C₂-Alkyl,
R₂ Wasserstoff, C₁-C₂-Alkyl oder Phenyl und
Me Wasserstoff, Natrium oder ein organisches Ammonium- oder Alkanolammmoniumkation bedeutet.

6. Farbstoffmischung gemäss einem der Ansprüche 1 bis 5, **dadurch gekennzeichnet, dass** sie einen roten Farbstoff der Formel 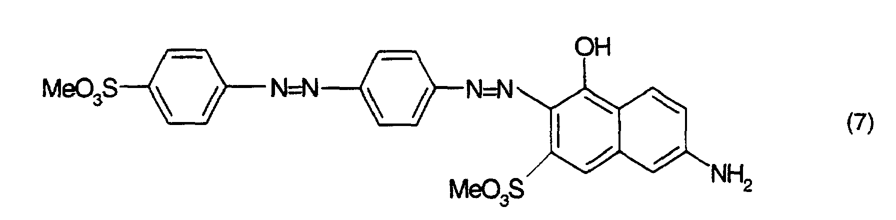 oder der Formel 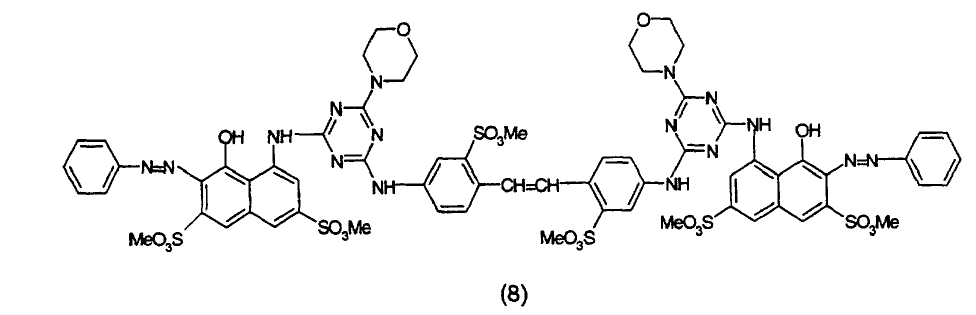 enthält, worin
Me Wasserstoff, Natrium oder ein organisches Ammonium- oder Alkanolammmoniumkation bedeutet.

7. Feste Farbstoffzubereitungen zum Nuancieren von weissem Papier, enthaltend eine Farbstoffmischung gemäss Anspruch 1.

8. Konzentrierte wässrige Lösungen von Farbstoffmischungen zum Nuancieren von weissem Papier, **dadurch gekennzeichnet, dass** sie 5 bis 30 Gew. %, bezogen auf das Gesamtgewicht der Lösung, einer Farbstoffmischung gemäss Anspruch 1 enthalten.

9. Konzentrierte wässrige Lösungen gemäss Anspruch 8, **dadurch gekennzeichnet, dass** sie weitere Hilfsmittel enthalten, beispielsweise Lösungsvermittler wie ε-Caprolactam oder Harnstoff, organische Lösungsmittel, wie z. B. Glykole, Polyethylenglykole, Dimethylsulfoxid, N-Methylpyrrolidon, Acetamid, Alkanolamine oder Polyglykolamine.

10. Verwendung der Farbstoffmischungen gemäss Anspruch 1 zum Nuancieren von weissem Papier.

11. Verwendung der Farbstoffmischungen gemäss Anspruch 1 zum Nuancieren von weissem, optischen Aufheller enthaltendem Papier.

12. Verfahren zum Nuancieren von Papier, **dadurch gekennzeichnet, dass** man das Papier mit einer Farbstoffmischung gemäss Anspruch 1 färbt, wobei man 0,5 bis 100 g, vorzugsweise 1 bis 50 g reinen Farbstoff pro Tonne Papier verwendet.

## Claims

1. A violet dye mixture for shading white paper, comprising a violet dye of the formula 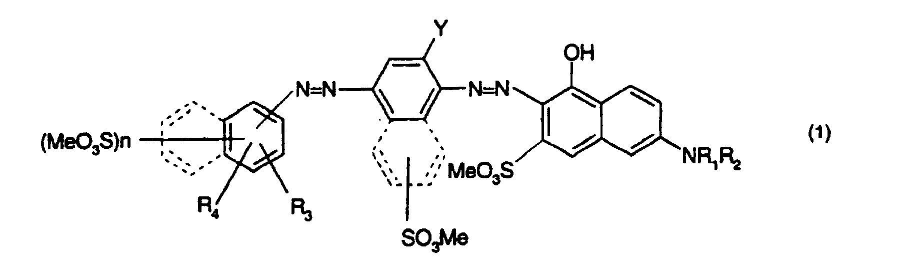 or 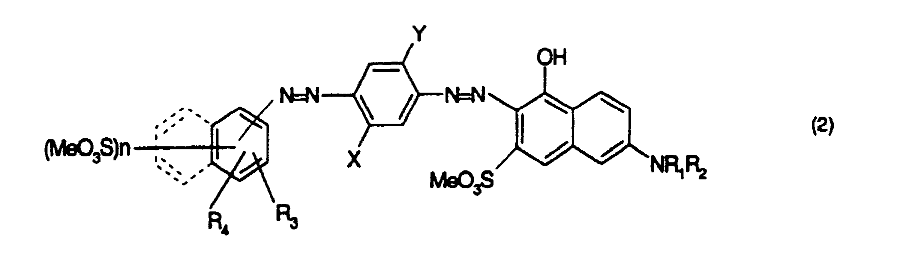 where
R₁ is hydrogen or alkyl,
R₂ is hydrogen, alkyl or substituted or unsubstituted aryl,
R₃ and R₄ are independently hydrogen or alkyl,
X and Y are independently hydrogen, alkyl or alkoxy,
n is 1 or 2, and
Me is hydrogen or one equivalent of a colourless cation,
and sufficient of a red, blue or further violet dye that this dye mixture is capable of producing in the Cielab colour coordinates system a relative hue angle of 270 to 295° when the dyeing contains 0.00005 to 0.005% by weight of dye, based on the weight of the paper.

2. A dye mixture according to claim 1, producing a relative hue angle of 275 to 285°.

3. A dye mixture as claimed in claim 1 or 2, comprising a violet dye of the formula (1) or (2) wherein
R₁ is hydrogen or C₁-C₄alkyl,
R₂ is hydrogen, C₁-C₄alkyl or substituted or unsubstituted phenyl,
R₃ is hydrogen or C₁-C₄alkyl,
X and Y are independently hydrogen, C₁-C₄alkyl or C₁-C₄alkoxy,
n is 1 or 2, and
Me is hydrogen, sodium, lithium or the protonated form of a C₄-C₁₂trialkylamine, of a C₄-C₁₂diamine, of a C₂-C₁₅alkanolamine or of a polyglycolamine.

4. A dye mixture according to any one of claims 1 to 3, comprising a violet dye of the formula 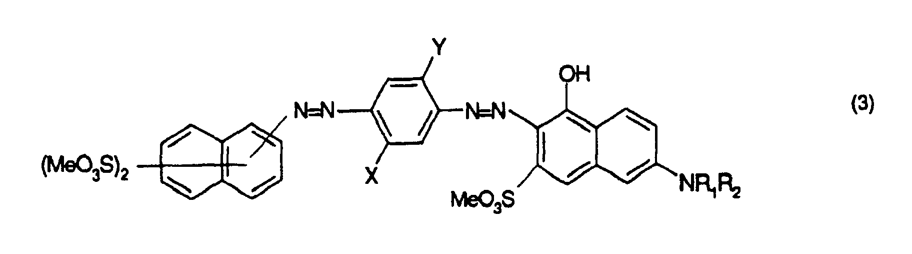 or 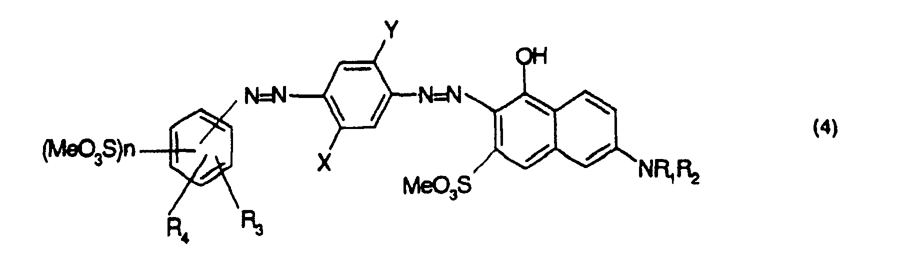 wherein
X is hydrogen or C₁-C₂alkyl,
Y is hydrogen or C₁-C₂alkoxy,
R₁ is hydrogen or C₁-C₂alkyl,
R₂ is hydrogen, C₁-C₂alkyl or phenyl,
R₃ and R₄ are independently hydrogen or C₁-C₂alkyl, and
Me is hydrogen, sodium or an organic ammonium or alkanolammonium cation.

5. A dye mixture according to claim 4, comprising a violet dye of the formula 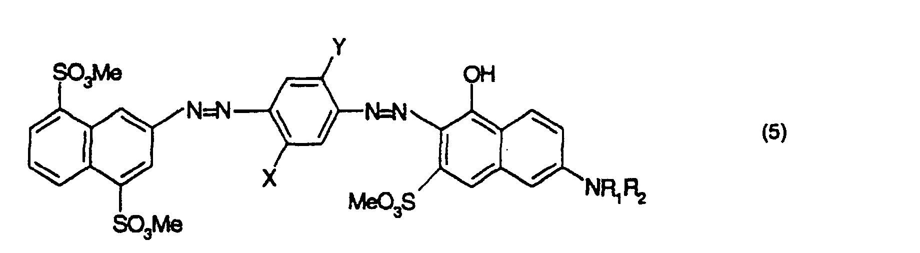 or of the formula 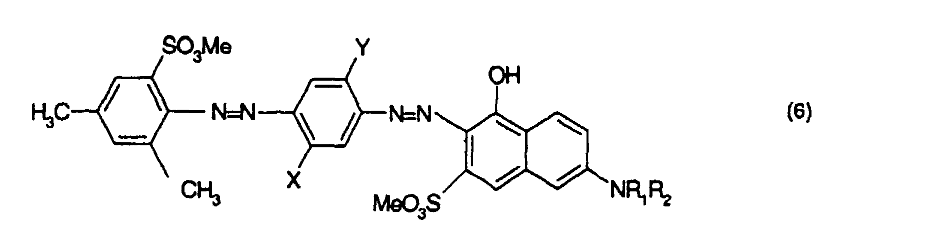 wherein
X and Y are independently hydrogen, C₁-C₂alkyl or C₁-C₂alkoxy,
R₁ is hydrogen or C₁-C₂alkyl,
R₂ is hydrogen, C₁-C₂alkyl or phenyl, and
Me is hydrogen, sodium or an organic ammonium or alkanolammonium cation.

6. A dye mixture according to any one of claims 1 to 5, comprising a red dye of the formula 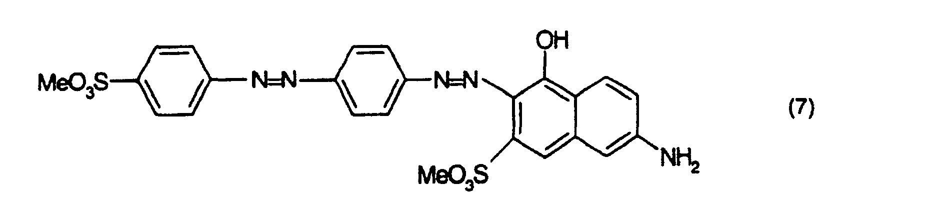 or of the formula 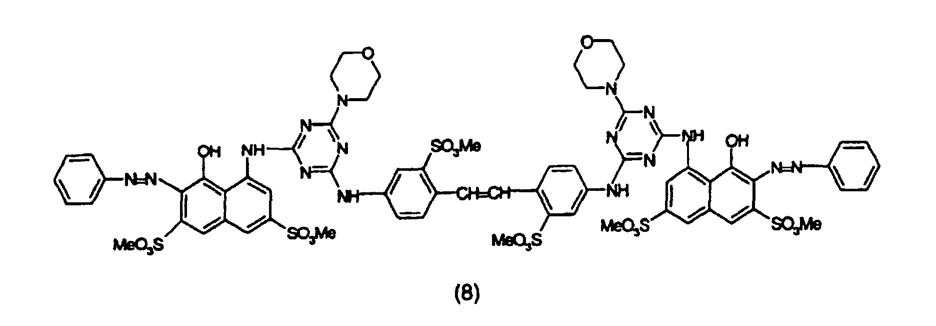 wherein
Me is hydrogen, sodium or an organic ammonium or alkanolammonium cation.

7. A solid dye preparation for shading white paper, comprising a dye mixture according to claim 1.

8. A concentrated aqueous dye mixture solution for shading white paper, comprising 5 to 30% by weight, based on the total weight of the solution, of a dye mixture according to claim 1.

9. A concentrated aqueous solution according to claim 8, comprising further auxiliaries, for example solubilizers such as ε-caprolactam or urea, organic solvents, for example glycols, polyethylene glycols, dimethyl sulfoxide, N-methylpyrrolidone, acetamide, alkanolamines or polyglycolamines.

10. The use of the dye mixture of claim 1 for shading white paper.

11. The use of the dye mixture of claim 1 for shading white paper comprising optical brightener.

12. A process for shading white paper, which comprises dyeing the paper with a dye mixture according to claim 1 using 0.5 to 100 g, preferably 1 to 50 g, of pure dye per tonne of paper.

## Revendications

1. Mélanges de colorants violets pour le nuançage de papier blanc, constitué d'un colorant violet de formule 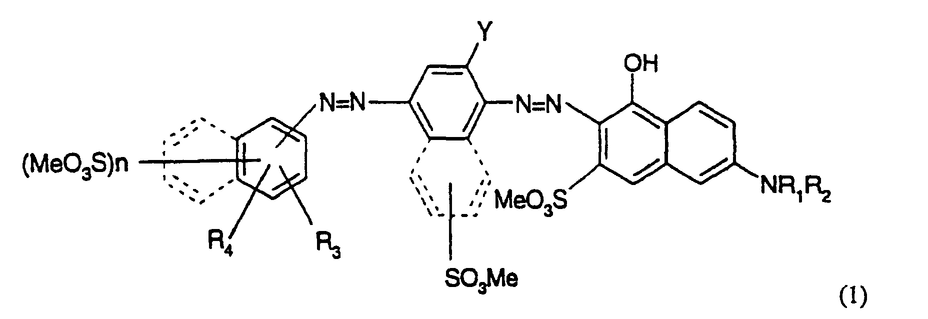 ou de formule 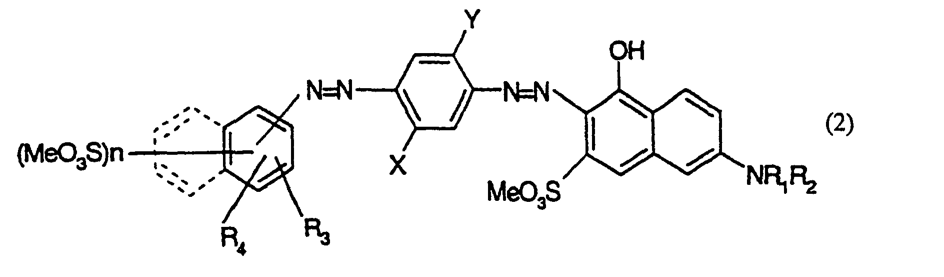 dans lesquelles
R₁ représente un atome d'hydrogène ou un reste alkyle,
R₂ représente un atome d'hydrogène, un reste alkyle ou un reste aryle éventuellement substitué,
R₃ et R₄ représentent chacun, indépendamment l'un de l'autre, un atome d'hydrogène ou un reste alkyle,
X et Y représentent chacun, indépendamment l'un de l'autre, un atome d'hydrogène ou un reste alkyle ou alcoxy,
n est 1 ou 2 et
Me représente un atome d'hydrogène ou un équivalent d'un cation incolore,
et d'un colorant rouge ou bleu ou d'un autre colorant violet en une quantité telle que ce mélange de colorants donne dans le système de coordonnées chromatiques de Cielab un angle de teinte relatif de 270 à 295° lorsque la coloration contient 0,00005 à 0,005 % en masse de colorant par rapport à la masse du papier.

2. Mélange de colorants selon la revendication 1, **caractérisé en ce que** l'on obtient avec ce mélange de colorants un angle de teinte relatif de 275 à 285°.

3. Mélange de colorants selon la revendication 1 ou 2, **caractérisé en ce qu'**il contient un colorant violet de formule (1) ou (2) dans laquelle
R₁ représente un atome d'hydrogène ou un reste alkyle en C₁-C₄,
R₂ représente un atome d'hydrogène, un reste alkyle en C₁-C₄ ou un reste phényle éventuellement substitué,
R₃ représente un atome d'hydrogène ou un reste alkyle en C₁-C₄,
X et Y représentent chacun, indépendamment l'un de l'autre, un atome d'hydrogène ou un reste alkyle en C₁-C₄ ou alcoxy en C₁-C₄,
n est 1 ou 2 et
Me représente un atome d'hydrogène, de sodium ou de lithium ou la forme protonée d'une trialkylamine en C₄-C₁₂, d'une diamine en C₄-C₁₂, d'une alcanolamine en C₂-C₁₅ ou d'une polyglycolamine.

4. Mélange de colorants selon l'une des revendications 1 à 3, **caractérisé en ce qu'**il contient un colorant violet de formule 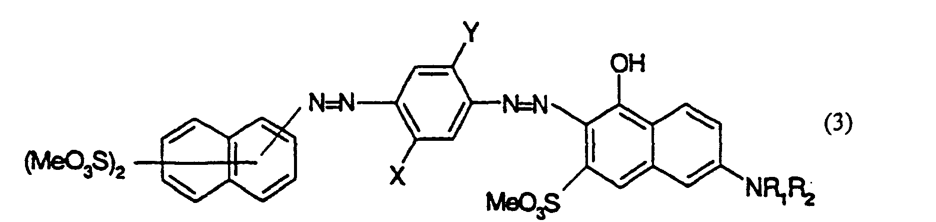 ou de formule 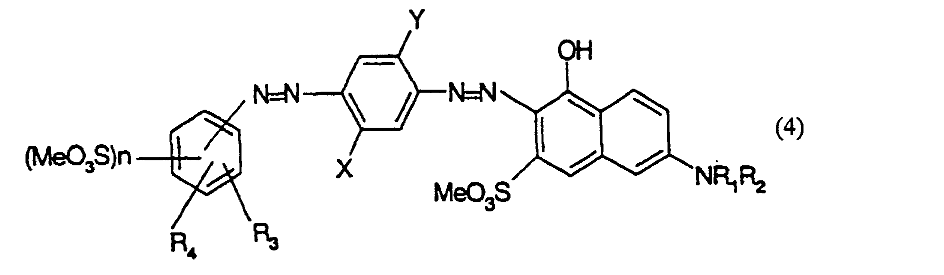 dans lesquelles
X représente un atome d'hydrogène ou un reste alkyle en C₁-C₂,
Y représente un atome d'hydrogène ou un reste alcoxy en C₁-C₂,
R₁ représente un atome d'hydrogène ou un reste alkyle en C₁-C₂,
R₂ représente un atome d'hydrogène ou un reste alkyle en C₁-C₂ ou phényle,
R₃ et R₄ représentent chacun, indépendamment l'un de l'autre, un atome d'hydrogène ou un reste alkyle en C₁-C₂, et
Me représente un atome d'hydrogène ou de sodium ou un cation d'ammonium organique ou d'alcanolammonium.

5. Mélange de colorants selon la revendication 4, **caractérisé en ce qu'**il contient un colorant violet de formule 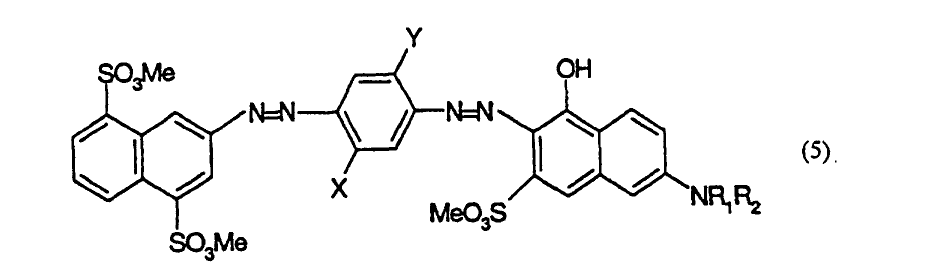 ou de formule 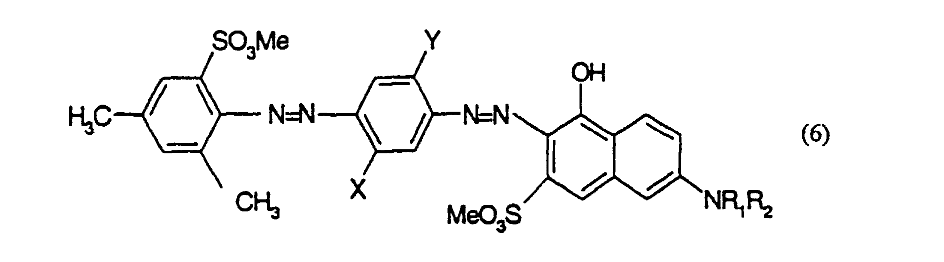 dans lesquelles
X et Y représentent indépendamment l'un de l'autre un atome d'hydrogène ou un reste alkyle en C₁-C₂ ou alcoxy en C₁-C₂,
R₁ représente un atome d'hydrogène ou un reste alkyle en C₁-C₂,
R₂ représente un atome d'hydrogène ou un reste alkyle en C₁-C₂ ou phényle, et
Me représente un atome d'hydrogène ou de sodium ou un cation d'ammonium organique ou d'alcanolammonium.

6. Mélange de colorants selon l'une des revendications 1 à 5, **caractérisé en ce qu'**il contient un colorant rouge de formule 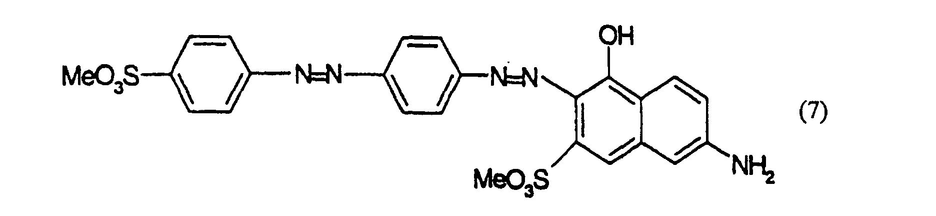 ou de formule 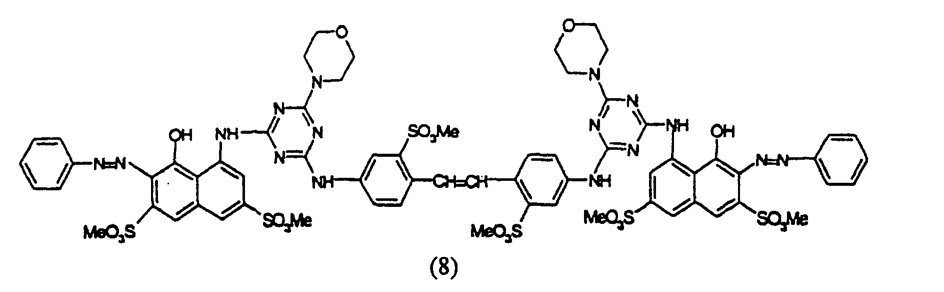 dans lesquelles Me représente un atome d'hydrogène ou de sodium ou un cation d'ammonium organique ou d'alcanolammonium.

7. Préparations de colorants solides pour le nuançage de papier blanc, contenant un mélange de colorants selon la revendication 1.

8. Solutions aqueuses concentrées de mélanges de colorants pour le nuançage de papier blanc, **caractérisées en ce qu'**elles contiennent 5 à 30 % en masse, par rapport à la masse totale de la solution, d'un mélange de colorants selon la revendication 1.

9. Solutions aqueuses concentrées selon la revendication 8, **caractérisées en ce qu'**elles contiennent d'autres agents auxiliaires, par exemple des agents favorisant la dissolution comme l'ε-caprolactame ou l'urée, des solvants organiques comme, par exemple, des glycols, des polyéthylèneglycols, le diméthylsulfoxyde, la N-méthylpyrrolidone, l'acétamide, des alcanolamines ou des polyglycolamines.

10. Utilisation des mélanges de colorants selon la revendication 1 pour le nuançage de papier blanc.

11. Utilisation des mélanges de colorants selon la revendication 1 pour le nuançage de papier blanc contenant des azurants optiques.

12. Procédé de nuançage de papier, **caractérisé en ce que** l'on colore le papier avec un mélange de colorants selon la revendication 1, en utilisant 0,5 à 100 g, de préférence 1 à 50 g de colorant pur par tonne de papier.
